# FASCICULE DE BREVET EUROPEEN

(11) **EP 3 445 601 B1**
(45) Date de publication et mention de la délivrance du brevet: **11.03.2020**
(21) Numéro de dépôt: 17719668.0
(22) Date de dépôt: 10.04.2017
(51) Int. Cl.: B60K 11/08

(54) **DISPOSITIF D'OUVERTURE ET DE FERMETURE DE VOLETS**
VORRICHTUNG ZUM ÖFFNEN UND SCHLIESSEN VON KLAPPEN
DEVICE FOR OPENING AND CLOSING OF FLAPS

(30) Priorité: 22.04.2016 FR 1653569
(43) Date de publication de la demande: 27.02.2019
(73) Titulaire: Compagnie Plastic Omnium, 69007 Lyon (FR)
(72) Inventeur: PARRA, Stéphane, 69120 Vaulx-en-velin (FR); MAZUE, Bertrand, 69008 Lyon (FR); JACOMY, Julien, 38510 Morestel (FR)
(74) Mandataire: LLR
(86) Numéro de dépôt international: PCT/FR2017/050854
(87) Numéro de publication internationale: WO 2017/182732

(56) Documents cités:
- EP-A1- 0 500 430
- EP-A2- 1 728 667
- FR-A5- 2 135 686
- GB-A- 320 786
- US-A- 3 210 003
- US-A1- 2012 074 729
- US-A1- 2013 068 403

## Description

L'invention a pour objet un dispositif mécanique de déploiement et de repli d'un ou plusieurs ensembles de volets utilisés dans les véhicules automobiles. Ces volets permettent par exemple de modifier les conditions d'entrée d'air dans un compartiment moteur et favoriser les échanges thermiques, ou d'occulter ou découvrir un équipement technique d'aide à la conduite tel qu'un laser. Ces multiples fonctionnalités peuvent être requises simultanément ou indépendamment les unes des autres.

Par ailleurs on préfère mettre en œuvre une pluralité de volets ayant chacun une surface réduite, dans le but de répartir sur un plus grand nombre de volets les forces aérodynamiques s'exerçant sur leur surface lorsque le véhicule roule à grande vitesse. Les volets étant de plus petite taille cela permet de réduire par ailleurs l'espace libre nécessaire pour assurer leur débattement angulaire.

Les volets peuvent participer également au style général de la carrosserie, et sont alors visibles depuis l'extérieur du véhicule.

Lorsque les volets sont utilisés pour réguler le flux d'air ambiant un dispositif pilote l'angle d'ouverture des volets en fonction des paramètres de roulage de manière à réguler le volume d'air entrant.

De même, lorsqu'un volet a pour fonction d'occulter un équipement technique d'aide à la conduite, le volet s'ouvre par exemple au démarrage du véhicule et se referme lorsque le moteur est mis à l'arrêt, ou lors de toute autre demande du boitier de commande du véhicule.

Il existe de nombreux dispositifs de commande d'ouverture et de fermeture de volets.

Ces mécanismes sont souvent complexes et ne permettent pas facilement de mettre en œuvre des fonctionnalités variées, à défaut de prévoir autant de mécanismes particuliers que de fonctionnalités.

Un dispositif de manoeuvre d'un ensemble de volets est connu du document EP 0 500 430 A1.

L'invention a pour objet de proposer un mécanisme simplifié permettant un usage modulaire, et donc facilement adaptable à des fonctionnalités diverses à moindre coût.

Selon l'invention, on propose un dispositif de manœuvre pour animer un ensemble de volets formés d'un ou plusieurs volets, chaque volet pivotant autour d'un axe de rotation monté sur un châssis, les volets d'un ensemble de volets étant animés en rotation par au moins une plaque d'animation se déplaçant en translation entre deux positions extrémales selon un chemin linéaire situé dans un plan sensiblement perpendiculaire aux axes des volets et formant une direction principale, ladite plaque d'animation comportant des rainures de guidage, chacune des rainures de guidage coopérant avec un doigt disposé sur un jeu de biellettes monté sur un bord supérieur et/ou inférieur de chacun des volets dudit ensemble. Ce dispositif ce manœuvre se caractérise en ce que la ou les plaques d'animation sont entrainées en translation par au moins un câble d'entrainement formant une boucle fermée et circulant le long des bords inférieurs et/ou supérieurs des volets de sorte que le mouvement d'une plaque d'animation entre lesdites positions extrémales dans un sens et dans un sens contraire entraine respectivement l'ouverture et la fermeture de chacun des volets dudit ensemble de volets.

Il est ainsi possible de disposer d'un moyen d'entrainement simultanée dans deux directions opposées selon que l'on considère le câble d'entrainement sur son trajet aller ou sur son trajet retour. En aménageant judicieusement le parcours du câble à l'aide par exemple de poulies de renvoi il est possible d'animer en translation une ou plusieurs plaques d'animation disposées selon les besoins sur les bords inférieurs et/ou supérieurs des volets ou encore des plaques d'animation appartenant à des ensemble de volets distincts. Comme on le verra par la suite, de nombreuses variantes d'exécution sont possible en adaptant par exemple la forme des rainures de guidage pour adapter la puissance d'ouverture des volets ou pour permettre l'usage du dispositif sur des véhicules roulant à grande vitesse, ou encore pour multiplier le nombre d'ensemble de volets formant le dispositif pour répondre à des critères de style.

Le dispositif de manœuvre selon l'invention peut aussi comprendre isolément, ou en combinaison, les caractéristiques suivantes :
- Chaque rainure de guidage comporte chacune deux sections longitudinales linéaires parallèles à la direction principale, distantes l'une de l'autre d'une valeur donnée non nulle, et reliées entre elles par une section transversale formant une rampe faisant un angle donné avec ladite direction principale.
- Les positions selon la direction principale et les angles d'inclinaisons des rampes de chacune des rainures de guidage sont aménagés pour que, chacun des doigts engage la rampe de la rainure de guidage avec laquelle il coopère entre deux positions de la plaque d'animation définies préalablement pour chacun des volets d'un ensemble, de sorte que les volets dudit ensemble s'ouvrent et se ferment selon un ordre prédéterminé.
- Un jeu de biellettes est formé d'une biellette primaire articulée autour d'un premier axe monté sur le bord supérieur et/ou inférieur du volet, et d'une biellette secondaire supportant le doigt et reliée à la biellette primaire par une articulation pivotant librement autour d'un second axe, le premier et le second axe d'articulation des biellettes étant sensiblement parallèles à l'axe de rotation du volet sur lequel le jeu de biellette est monté.
- La plaque d'animation se déplace entre ses deux positions extrémales selon une trajectoire linéaire présentant un rayon de courbure.
- La plaque d'animation présente également un rayon de courbure identique à celui de la trajectoire sur laquelle elle circule.
- Le ou les câbles d'entrainement effectuent au moins un tour mort selon un sens donné autour d'une ou plusieurs poulies motorisées, de sorte que la mise en rotation de la ou des dites poulies motorisées entraine le mouvement en translation d'une ou plusieurs plaques d'animation.
- Les volets d'un ensemble de volets sont animés en rotation par une plaque d'animation supérieure et une plaque d'animation inférieure se déplaçant selon la direction principale, et coopérant chacune avec des jeux de biellettes reliées respectivement au bord supérieur et au bord inférieur de chacun des volets dudit ensemble de volets.
- La plaque d'animation supérieure d'un ensemble de volets et la plaque d'animation inférieure du même ensemble de volets sont reliées à un câble d'entrainement unique ou à un premier et à un second câble d'entrainement de sorte que, lorsque la ou les poulies motorisées sont mises en rotation, la plaque d'animation supérieure et la plaque d'animation inférieure dudit ensemble de volets circulent dans le même sens selon la direction principale.
- Le dispositif de manœuvre selon l'une des revendications comprend deux ensembles de volets distincts l'un de l'autre, chacun des volets d'un ensemble pivotant sur leurs axes respectifs selon un sens de rotation opposé au sens de rotation des volets de l'autre ensemble.
- Un ensemble de volets est formé d'une ou plusieurs paires de demi-volets formées chacune d'un premier demi-volet et d'un second demi-volet pivotant chacun sur un axe en sens opposé l'un de l'autre, chaque demi-volet comportant un ou plusieurs panneaux disposés de sorte que, lorsque la paire de demi-volets est en position fermée, les panneaux du premier demi-volet occultent une surface complémentaire à la surface occultée par les panneaux du deuxième demi-volet.
- Les premiers demi-volets d'un ensemble formé de paires de demi-volets sont entrainés par la plaque d'animation supérieure, et les seconds demi-volets dudit ensemble (1) formé de paires de demi-volets sont entrainés en rotation par la plaque d'animation inférieure.

L'invention sera mieux comprise à la lecture des figures annexées, qui sont fournies à titre d'exemples et ne présentent aucun caractère limitatif, dans lesquelles :
- La figure 1 est une vue en perspective représentant deux ensembles de volets en position ouverte.
- La figure 2 est une vue en perspective partielle représentant un premier ensemble de volet en position fermée.
- La figure 3 est une vue en perspective représentant les plaques d'animation et les câbles d'entrainement des deux ensembles de volets.
- La figure 4 est une vue de dessus des jeux de biellettes.
- La figure 5 est une vue en perspective partielle représentant le premier ensemble de volet en position ouverte.
- Les figures 6a, 6b, 6c, 6d et 6e représentent des rainures de guidage de formes variées.
- Les figures 7, 7a, 8, 8a, 9, 9a, 10, 10a, 11, 11a, 12 et 12a représentent les mouvements des volets en fonction des étapes du mouvement de la plaque d'animation.
- Les figures 13, 14 et 15 représentent des exemples de demi-volets.
- Les figures 16, 17, 18, 19, 20, 21, 22 et 23 représentent différentes variantes de circulation du câble d'entrainement.

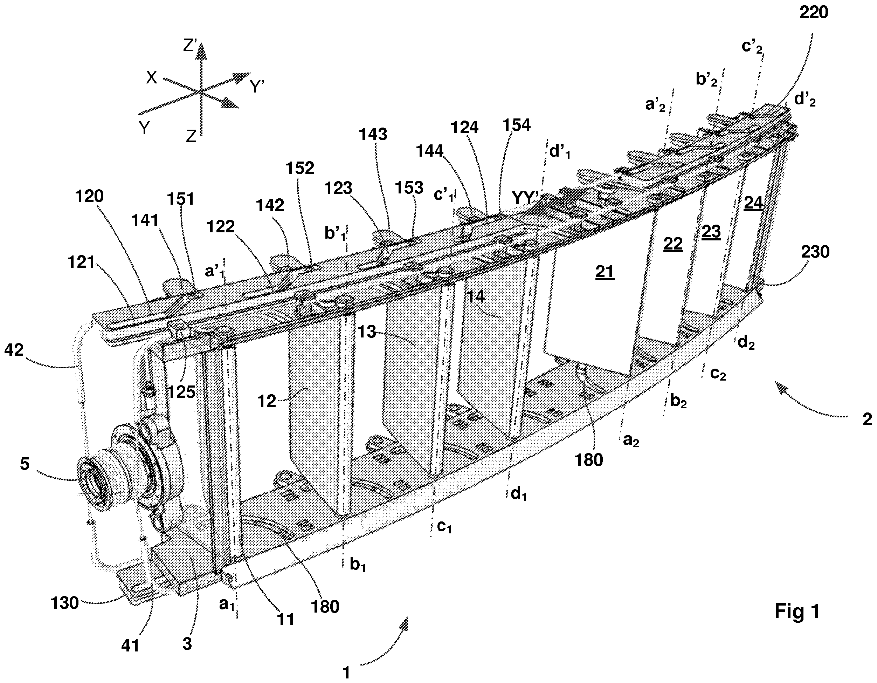

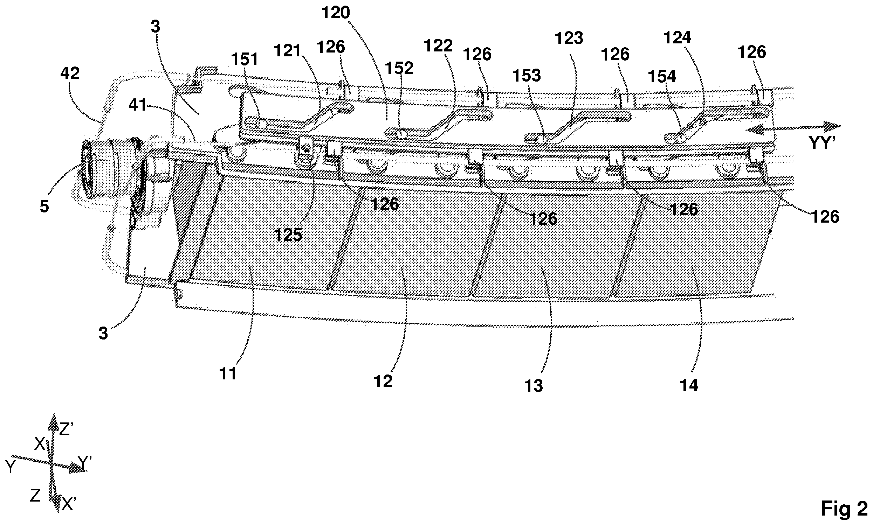

Le dispositif de manœuvre illustré en perspective sur les figures 1 et 2, comprend un premier ensemble de volets 1, formé de quatre volets 11, 12, 13, 14 et un deuxième ensemble de volets 2, formé également de quatre volets 21, 22, 23 et 24. Ces volets sont montés sur un châssis 3, et pivotent librement autour respectivement des axes de rotation a₁a₁', b₁b₁', c₁c₁', d₁d₁', a₂a₂', b₂b₂', c₂c₂', d₂d₂'. De manière non restrictive, les axes de rotation sont orientés par convention selon la direction ZZ' représentant en règle générale la direction verticale dans le repère du véhicule. Bien évidemment, il est tout à fait possible, sans se départir de l'objet de l'invention, d'orienter le repère OXYZ selon les nécessités d'implantation du dispositif de manœuvre dans le véhicule. Les axes de rotation des volets peuvent donc tout aussi bien orientés dans la position verticale, horizontale ou toute autre direction jugée adéquate par le concepteur du véhicule.

Pour faciliter la description qui suit, les explications détaillées du mécanisme porteront sur la partie supérieure du premier ensemble de volet, en considérant que les mécanismes de la partie inférieure ou celui du deuxième ensemble de volets sont symétriques au mécanisme supérieur du premier ensemble par rapport à un plan équatorial (OXY) ou par rapport à un plan médian (OZX).

Les volets du premier ensemble 1 sont entrainés en rotation par une plaque d'animation supérieure 120. Les volets du deuxième ensemble sont entrainés par la plaque d'animation supérieure 220.

La plaque d'animation supérieure 120 comprend des rainures de guidage 121, 122, 123, 124 coopérant respectivement avec des doigts 151, 152, 153 et 154 montés sur des jeux de biellettes 141, 142, 143 et 144. Comme on le verra en détail par la suite, ces jeux de biellettes servent à mettre les volets en rotation lorsque la plaque d'animation circule le long de la direction principale YY'.

La trajectoire linéaire de la plaque d'animation peut être rectiligne ou présenter un léger rayon de courbure, préférentiellement constant, pour épouser la forme du véhicule. Ce rayon de courbure peut aller de quelques dizaines de centimètres à 2 ou 3 mètres, selon les impératifs de style imposés au véhicule dans l'entourage immédiat du dispositif de manœuvre.

Dans ces conditions, la plaque d'animation peut également présenter un rayon de courbure identique à celui de la trajectoire qu'elle est amenée à suivre.

La plaque d'animation supérieure 120 est entrainée en mouvement par un premier câble d'entrainement 41 circulant en boucle fermée le long de la partie supérieure et de la partie inférieure des volets. Elle est reliée au premier câble 41 par un point d'attache 125.

On entend ici par câble tout moyen de transmission des efforts tels qu'un câble métallique ou en fibres synthétique, mais également tout moyen équivalent tel qu'une chaine, une courroie, une courroie crantée, ou une lame souple.

Le premier câble 41 fait au moins un tour mort selon un premier sens autour d'une poulie motorisée 5. De la sorte, lorsque la poulie motorisée tourne dans un premier sens la plaque d'animation 120 circule dans le sens YY' et, lorsque la poulie 5 tourne en sens inverse, la plaque d'animation 120 circule dans le sens Y'Y.

Sur la figure 1, on peut observer que les volets sont tous en position ouverte, la plaque de manœuvre occupe alors une de ses positions extrémales et les doigts sont situés à une extrémité de la rainure de guidage avec laquelle ils coopèrent. Sur la figure 2, les volets sont en position fermée et la plaque d'animation 120, est disposée à son autre position extrémale. Les doigts sont alors situés à l'autre extrémité de la rainure de guidage.

Lorsque le véhicule est destiné à rouler à grande vitesse, il devient nécessaire d'augmenter la puissance des organes moteurs sollicités au moment de l'ouverture ou de la fermeture en raison des efforts aérodynamiques appliqués sur les volets. Dans ces conditions, pour vaincre des efforts aérodynamiques plus élevés et pour favoriser la rotation des volets il peut s'avérer utile de disposer une deuxième plaque d'animation inférieure 130 comprenant des rainures de guidage coopérant avec des doigts montés sur des biellettes (non visibles). Les couples d'ouverture et de fermeture s'appliquent donc sur les deux extrémités de l'axe autour duquel les volets pivotent. Cette plaque d'animation inférieure 130 entraine en mouvement les volets 11, 12, 13 et 14 par un jeu de biellettes montés sur le bord inférieur des volets (partiellement visibles).

Un deuxième câble d'entrainement 42, circulant également en boucle fermée le long de la partie supérieure et de la partie inférieure des volets entraine la plaque d'animation inférieure 130 en translation le long de la direction principale YY'. Le second câble d'entrainement 42 fait également un tour mort autour de la poulie motorisée 5 selon un second sens inverse au premier sens effectué par le premier câble41 autour de ladite poulie 5.

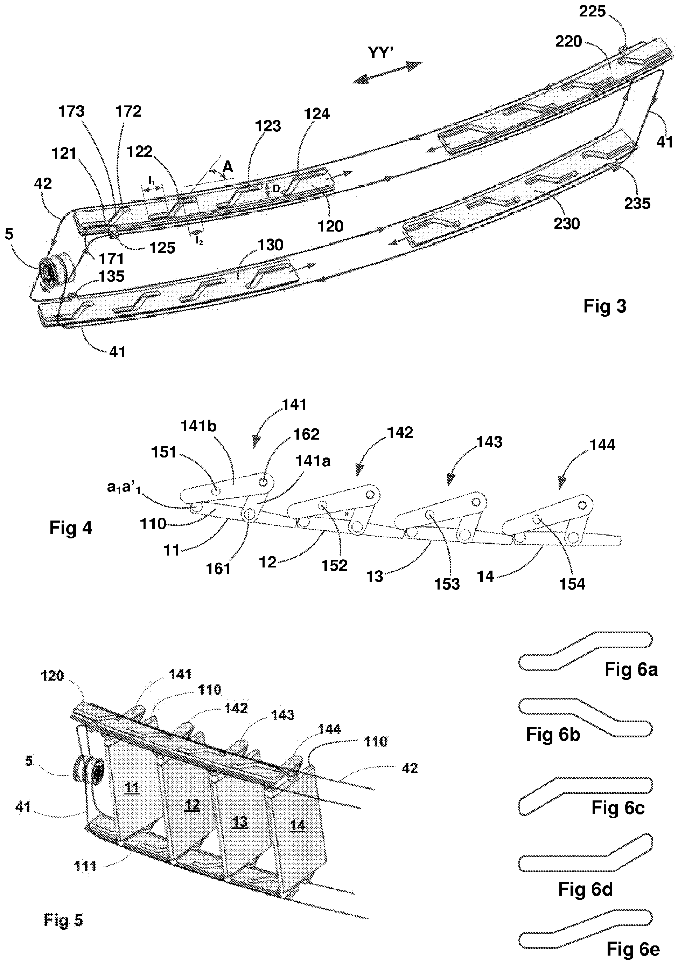

La plaque d'animation inférieure 130 est reliée au second câble d'entrainement 42 par un point d'attache 135 (non visible sur la figure 1, et visible sur la figure 3).

De la sorte, lorsque la poulie motorisée tourne dans un sens, les plaques d'animation 120 et 130 se déplacent dans le même sens le long de la direction YY'.

Ce montage comprenant deux câbles d'entrainement faisant chacun un tour mort dans des sens opposés autour de la poulie motorisée permet également, à l'aide d'un seul moteur, de faire avancer les plaques d'animation 120 et 130 de manière totalement synchrone, et d'appliquer le couple moteur simultanément sur les axes des volets pour entrainer leur ouverture ou leur fermeture. Il engendre un gain de coût non négligeable.

La figure 2 permet de mieux visualiser le mode de circulation de la plaque d'animation et des câbles d'entrainement 41 et 42 sur la partie supérieure du dispositif. A cet effet, des glissières 126 sont disposées sur le châssis 3.

La plaque d'animation supérieure 120 coulisse sur les parties intérieures des glissières 126. Les câbles 41 et 42 sont guidés par des entailles pratiquées dans les glissières 126 de manière à leur permettre d'épouser le galbe éventuel du dispositif de manœuvre, lorsque ce dernier présente, comme cela a été évoqué ci-dessus, un rayon de courbure pour épouser la forme d'un véhicule.

Un deuxième ensemble de volets 2, représenté à la figure 1, est entrainé en mouvement par les plaques d'animation 220 et 230. La plaque d'animation supérieure 220 est reliée au second câble d'entrainement 42 par un point d'attache 225 (visible sur la figure 3) et la plaque d'animation inférieure 230 est reliée au premier câble d'entrainement 41 par un point d'attache 235 (visible sur la figure 3).

Ce montage permet, lorsque la poulie motorisée 5 tourne dans un sens donné, de faire circuler les plaques d'animation supérieure 220 et inférieure 230 du second ensemble de volet 2 le long de la direction YY', dans le sens opposé au sens de circulation le long de la même direction, des plaques d'animation supérieure 120 et inférieure 130, du premier ensemble de volets 1.

Cet arrangement particulier, rendu possible par la présence des deux câbles d'entrainement 41 et 42 enroulés dans des sens opposés autour de la poulie motorisée 5, permet de faire pivoter les volets du second ensemble 2, dans un sens de rotation opposé au sens de rotation des volets du premier ensemble 1.

Une variante d'exécution est également possible dans laquelle chaque ensemble de volets est entrainé en rotation par une seule plaque d'animation. Dans ces conditions, le premier ensemble de volets 1 est entrainé en rotation par une plaque d'animation supérieure 120, et le second ensemble de volets 2 est entrainé en rotation par une plaque d'animation inférieure 230. On observe alors que ces deux ensembles de volets peuvent être pilotés par un seul câble d'entrainement.

De même, lorsque l'on souhaite ouvrir les volets des deux ensembles en les faisant tourner tous selon un même sens de rotation, les deux plaques d'animation supérieure ou inférieures peuvent être reliées à un même câble d'entrainement.

Ceci s'avère particulièrement utile lorsque l'on cherche, par exemple, à conserver les effets de style liés à la symétrie axiale d'un front du véhicule.

La figure 3 permet de visualiser les seuls câbles d'entrainement 41 et 42 auxquels sont reliées les plaques d'animation 120, 130, 220 et 230 par les points d'attaches respectivement 125, 135, 225 et 235. Lorsque la poulie motorisée tourne dans le sens indiquée par la flèche, les câbles d'entrainement circulent selon les flèches et les plaques d'animation ont pour effet de circuler dans des sens opposés en se dirigeant vers le centre de symétrie du dispositif. En inversant le sens de rotation de la poulie motorisée, on inverse le sens de déplacement des plaques d'animation.

La figure 3, permet également de visualiser un arrangement particulier rendu possible par la forme des rainures de guidage 121, 122, 123 et 124 dans lesquelles circulent les doigts 151, 152, 153 et 154 (visibles sur la figure 1 ou la figure 2).

Chacune de ces rainures de guidage comporte une première section longitudinale 171, s'étendant dans la direction principale YY', de longueur l₁, et une seconde section longitudinale 172 s'étendant également le long de la direction YY' et de longueur l₂. Ces deux sections longitudinales sont sensiblement parallèles entre elles et sont distantes l'une de l'autre d'une distance D, mesurée ici selon la direction XX'. Elles sont reliées entre elles par une rampe 173 faisant un angle A avec la direction principale. Cet angle A est strictement inférieur à 90° et de préférence compris entre 30° et 75°.

Pour des raisons mécaniques évidentes, la longueur de la rainure de guidage projetée sur la direction principale est au moins égale à la distance parcourue par la plaque d'animation entre ses deux positions extrémales.

Comme on le verra par la suite, c'est en franchissant la rampe, que le doigt du jeu de biellette entraine, par le mouvement des biellettes, la rotation du volet auquel il est associé. Lorsque le doigt est dans une section longitudinale de la rainure de guidage le volet associé est en position totalement ouverte ou totalement fermée. La poursuite du mouvement de la plaque d'animation le long de l'axe YY' ne modifie donc pas la position du volet.

On observe également qu'il est possible d'ajuster à volonté les valeurs respectives des longueurs des sections longitudinales ou de l'angle A. Les figures 6a, 6b, 6c et 6d permettent d'illustrer, à titre d'exemple des formes possibles de rainures de guidage Ces divers arrangements permettent alors de piloter la séquence et la cinématique de l'ouverture et de la fermeture des volets. Comme on peut le visualiser sur ces figures, les longueurs l₁ et/ou l₂ des sections longitudinales peuvent être nulles.

On peut par exemple, et de manière non limitative, ouvrir un premier volet directement au démarrage du véhicule, puis ouvrir en séquence les trois autres volets en fonction de la température du moteur. Cette cinématique particulière présente également l'avantage de minimiser les efforts au niveau de la poulie motorisée, en ce qu'un seul volet s'ouvre à la fois. On peut également procéder à l'ouverture (ou la fermeture) successive de chacun des volets en opérant l'ouverture complète (ou la fermeture complète) d'un volet avant d'entamer l'ouverture (ou la fermeture) du volet suivant.

On peut également concevoir une rampe de forme non rectiligne, avec un angle A variable, de manière à adapter la vitesse d'ouverture ou de fermeture des volets.

Il résulte de ces variations maitrisées que le doigt du jeu de biellette circulant dans la rainure de guidage franchira la rampe 173 entre deux positions précises de la plaque d'animation et à une vitesse directement proportionnelle à la valeur de l'angle A.

Les rainures de guidage disposées sur la plaque d'animation supérieure et sur la plaque d'animation inférieure et destinées à entrainer un même volet ont évidemment des sections longitudinales 171 et 172 de longueur identiques et des rampes formant le même angle avec la direction principale.

La figure 4 permet de visualiser les jeux de biellettes, 141, 142, 143, 144 associés respectivement aux volets 11, 12, 13, 14. Tous ces jeux de biellettes sont identiques et fonctionnent sur le même principe. Le jeu de biellette 141, comporte une biellette primaire 141a montée sur le bord supérieur 110 du volet 11 par l'intermédiaire d'une articulation 161 d'axe sensiblement vertical. Cette biellette primaire est elle-même reliée par l'intermédiaire d'un axe 162 à une biellette secondaire 141b portant un doigt 151 coopérant avec la rainure de guidage 121.

En franchissant la rampe 173 de la rainure de guidage 121, le doigt 151 entraine la biellette secondaire 141b qui elle-même entraine la biellette primaire et provoque le mouvement le déploiement ou le repli du volet 11.

Lorsque l'ensemble de volets comporte une plaque d'animation supérieure et une plaque d'animation inférieure, les jeux de biellettes associés à la plaque d'animation inférieure sont montés sur le bord inférieur 111 des volets comme cela est visible sur la figure 5.

Pour des raisons de protection et d'esthétique, il peut être utile d'aménager le châssis 3 de sorte que les jeux de biellettes soient isolés des agressions extérieures. Dans ces conditions, l'axe 161 traverse le châssis 3 et circule dans une glissière circulaire 180, comme cela est visible sur la figure 1.

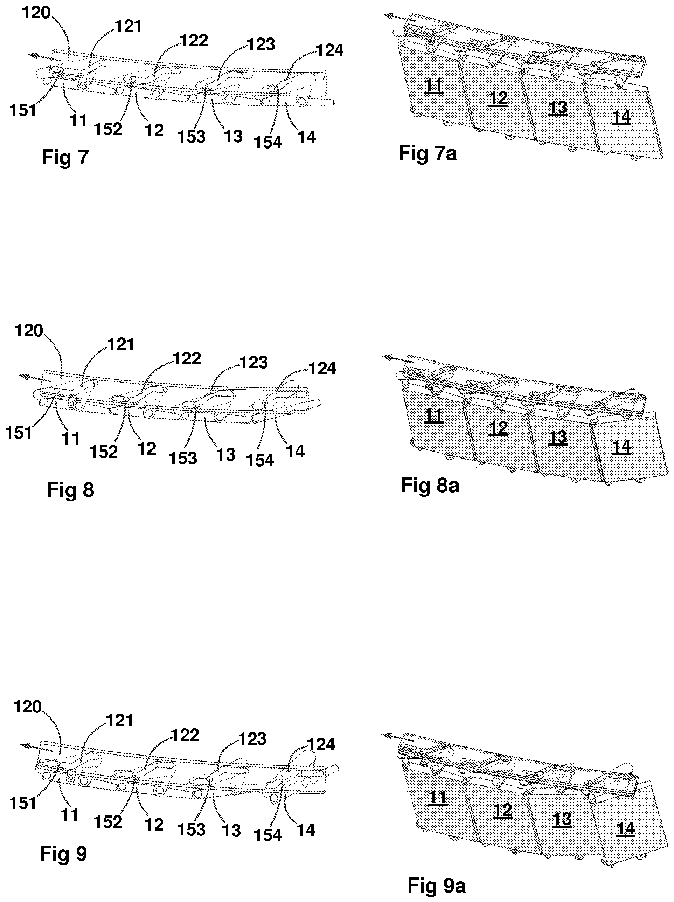

Les figures 7/7a et suivantes illustre une cinématique possible d'un mouvement d'ouverture séquencé des volets.

Sur les figures 7 et 7a la plaque d'animation 120 est dans une position extrémale dans laquelle l'ensemble des volets est en position fermée. Tous les doigts de guidage sont positionnés dans la section longitudinale 171 de leur rainure de guidage respective.

Lorsque la plaque d'animation commence son mouvement de translation le long de l'axe YY' en se dirigeant du côté externe du mécanisme (voir flèche), le doigt 154 pénètre dans la rampe de la rainure de guidage 124, le volet 14 commence alors à s'ouvrir. Comme cela est illustré aux figures 8/8a. Les volets 11, 12 et 13 restent en position fermée.

Aux figures 9/9a, le doigt 154 continue de se mouvoir au sein de la rampe de la rainure de guidage 124 de manière à poursuivre le mouvement d'ouverture du volet 14. Et le doigt 153 pénètre dans la rampe de la rainure de guidage 123. Le volet 13 s'entrouvre.

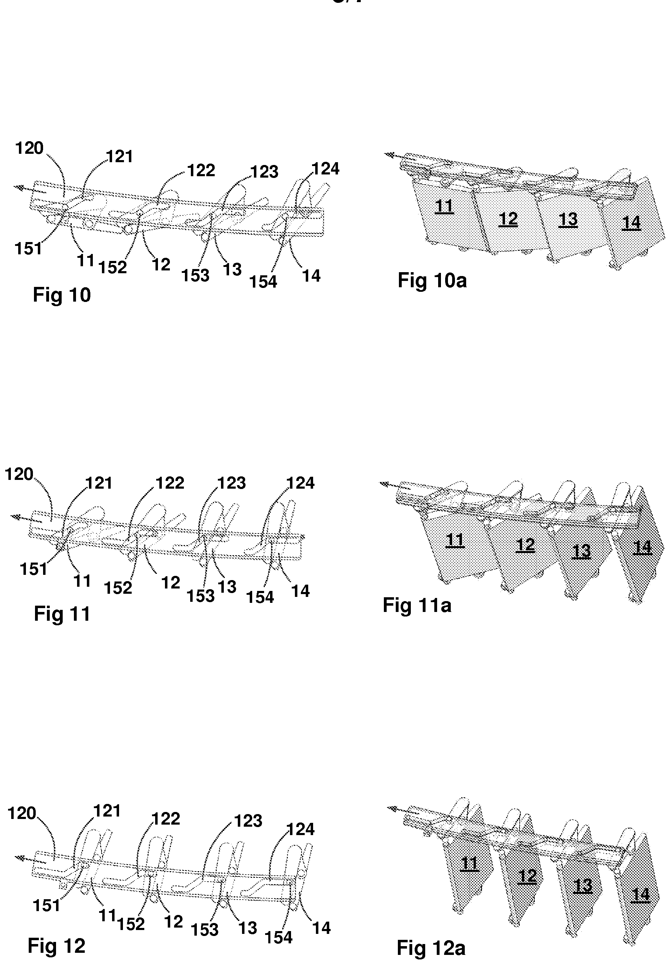

Les figures 10/10a permettent de visualiser la position de la plaque d'animation dans laquelle le volet 14 achève son mouvement d'ouverture, alors que le volet 13 est ouvert à demi tandis que le volet 12 est encore à peine ouvert. Le volet 11 reste encore totalement fermé.

Aux figures 11/11a, le volet 14 est complètement ouvert, et les volets 11, 12, poursuivent leur mouvement d'ouverture.

Lorsque la plaque d'animation 120 arrive à son autre position extrémale, les volets 11, 12, 13 et 14 sont tous en position ouverte. Tous les doigts 151, 152, 153 et 154 sont alors disposés dans la section longitudinale 172 de leur rainure de guidage respective, comme cela est visible aux figures 12 et 12a.

Comme cela a déjà été signifié dans le texte qui précède, les mouvements des plaques d'animation 130, 220 et 230, et les mouvements d'ouverture et de fermeture des volets peuvent se déduire mutatis mutandis des explications fournies ci-dessus décrivant plus particulièrement le mouvement de la plaque d'animation supérieure 120 du premier ensemble de volet 1.

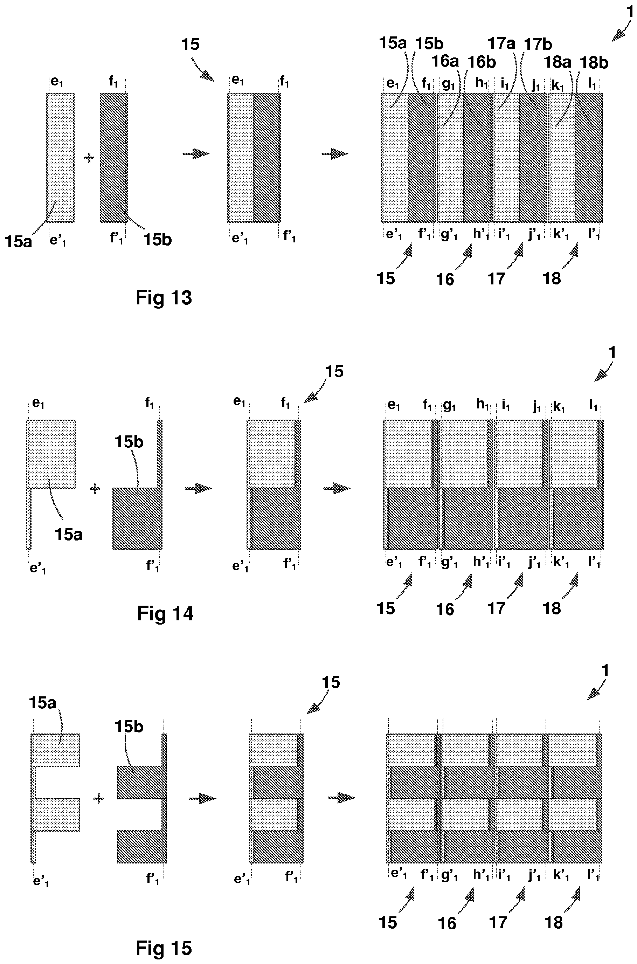

Les figures 13, 14 et 15 décrivent une des adaptations possibles du dispositif de manœuvre selon l'invention dans lequel un ensemble de volets est formé d'une ou plusieurs paires respectivement 15, 16, 17 et 18 de demi-volets, respectivement 15a, 15b, 16a, 16b, 17a, 17b, 18a, 18b. Chaque paire de demi volet est elle-même formée d'un premier et d'un second demi volet pivotant chacun sur un axe respectivement e₁e'₁, f₁f'₁, g₁g'₁, h₁h'₁, i₁i'₁, j₁j'₁, k₁k'₁, l₁l'₁, en sens opposé l'un de l'autre.

Chaque demi volet comporte un ou plusieurs panneaux disposés de sorte que lorsque la paire de demi volet est en position fermée, les panneaux du premier demi volet occultent une surface complémentaire à la surface occultée par les panneaux du deuxième demi-volet. En règle générale et pour des raisons d'esthétique, chaque demi-volet occulte la moitié de la surface occultée par la paire de demi-volets.

Les panneaux peuvent avoir des formes différentes selon l'effet de style recherché. La paire de demi-volets illustrée à la figure 13 comprend des demi-volets formés chacun de deux panneaux verticaux déployés l'un et l'autre sur toute la hauteur du demi-volet et occupant chacun la moitié de la surface occultée par la paire de demi-volets.

La paire de demi-volets illustrée à la figure 14 comprend deux demi-volets dont les panneaux occultent respectivement la moitié supérieure et la moitié inférieure de la surface totale occultée par la paire de demi-volets.

La paire de demi-volets représentée à la figure 15 illustre une autre configuration possible dans laquelle le premier demi-volet 15a comprend deux panneaux séparés occultant le premier et le troisième quart supérieur de la surface occultée par la paire de demi-volets, et dans lequel le second demi-volet 15b comprend également deux panneaux distincts occultant respectivement le second et le quatrième quart inférieur de la surface occultée par la paire de demi-volets 15. Les deux de demi-volets 15a et 15b occultent chacun des surfaces complémentaires et sensiblement égales dont la somme représente la totalité de la surface occultée par la paire 15. Cet arrangement autorise une ouverture en « damier » des différents ensembles constitués de la juxtaposition des paires de demi-volets.

De même, dans les exemples ci-dessus, les panneaux des demi-volets ont des surfaces sensiblement égales. Mais cette configuration n'est pas limitative, et il est tout à fait possible de concevoir des volets comportant des panneaux ayant des formes variées et des surfaces différentes, agencés pour occulter la totalité de la surface lorsque la paire de demi-volets est en position fermée.

L'entrainement en rotation des premiers demi-volets respectivement 15a, 16a, 17a et 18a d'un ensemble 1 est réalisé par la plaque d'animation supérieure reliée au premier câble d'entrainement et l'entrainement en rotation des seconds demi-volets est réalisé par la plaque d'animation inférieure reliée également au premier câble d'entrainement lorsque ledit premier câble d'entrainement effectue une boucle fermée en longeant les bords supérieurs et inférieurs des paires de demi-volets.

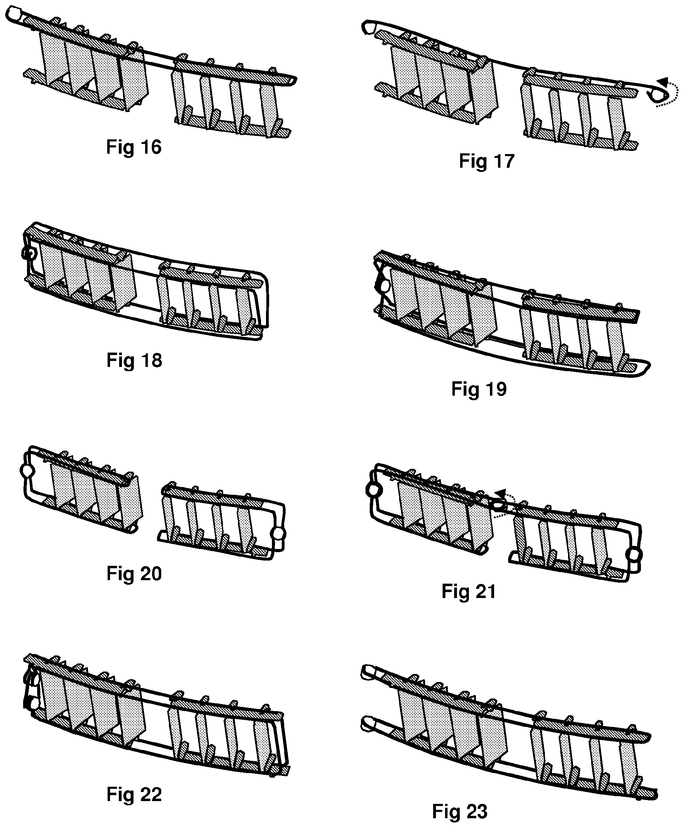

Les figures 16 à 23 décrivent des arrangements possibles de la motorisation et de la circulation du ou des câbles d'entrainement autour des ensembles de volets.

La figure 16 illustre le cas le plus simple dans lequel un seul câble d'entrainement circule en boucle fermée le long des bords supérieurs des volets. Chacun des ensembles de volets comprend une seule plaque d'animation supérieure permettant d'entrainer en rotation les volets dans des sens opposés. Un résultat identique peut être atteint lorsque le câble d'entrainement circule en boucle fermée le long des bords inférieurs des volets.

La figure 17 illustre le cas dans lequel le câble d'entrainement est relié par sa première extrémité à un moyen de motorisation assurant la traction du câble dans un sens, et par sa seconde extrémité à un moyen de rappel élastique assurant le rappel du câble dans l'autre sens. Le moyen de motorisation peut indifféremment être formé par une poulie motorisée telle que décrite précédemment ou par un vérin ou encore par un élément à mémoire de forme activable électriquement. Cette solution alternative présente un intérêt particulier lorsque l'on souhaite refermer les volets en l'absence de source de courant électrique au niveau de la poulie d'entrainement, ou de manière alternative lorsque l'on souhaite, en cas d'urgence, refermer les volets en un temps très court.

La figure 18 illustre le cas dans lequel le dispositif de manœuvre comprend deux câbles d'entrainement séparés formant chacune une boucle fermée circulant autour de la partie supérieure et inférieure des ensembles de volets et entrainés chacun par une unique poulie motorisée. Ce cas correspond à celui ayant servi de base à la présente description.

La figure 19 illustre le cas dans lequel le même câble d'entrainement réalise deux tours complets autour des volets en effectuant deux croisements successifs et en circulant sur la partie supérieure et sur la partie inférieure des ensembles de volets. Cette configuration permet d'obtenir les mêmes effets que ceux atteints avec un dispositif comprenant deux câbles d'entrainement et illustré à la figure 18. Le premier tour du câble autour des volets est équivalent au premier câble d'entrainement, et le second tour du câble autour des volets est équivalent au second câble d'entrainement.

La figure 20 illustre le cas dans lequel les volets de chaque ensemble est entrainé en rotation par son propre câble d'entrainement, animé chacun par sa propre poulie d'entrainement.

Les figures 21 et 22 sont des perfectionnements du cas illustré à la figure 21 dans lesquels les vitesses et les positions des deux câbles d'entrainement sont rendues synchrones par une poulie centrale comme illustré à la figure 21, ou dans lequel un câble d'entrainement effectue un tour mort autour de la poulie motorisée de l'autre câble d'entrainement comme illustré à la figure 22.

La figure 23 illustre le cas dans lequel les plaques d'animation supérieures sont entrainées en translation par un premier câble d'entrainement accouplé à une première poulie motorisée, et dans lequel les plaques d'animation inférieures sont entrainées par un deuxième câble d'entrainement accouplé à une seconde poulie motorisée. La synchronisation du mouvement des câbles se fait par l'intermédiaire des biellettes et des volets.

### NOMENCLATURE

1 Premier ensemble de volets.
11, 12, 13, 14 Volets du premier ensemble de volets.
15, 16, 17, 18 Paires de demi-volets du premier ensemble de volets.
15a, 15b, 16a, 16b, 17a, 17b, 18a, 18b Demi volets du premier ensemble de volets
110, 111 Bords supérieurs et inférieurs des volets du premier ensemble de volets.
120 Plaque d'animation supérieure du premier ensemble de volets.
121, 122, 123, 124 Rainures de guidage de la plaque supérieure du premier ensemble de volets.
125 Point d'attache de la plaque d'animation 120 sur le premier câble d'entrainement 41.
126 Glissières
130 Plaque d'animation inférieure du premier ensemble de volets.
135 Point d'attache de la plaque d'animation 130 sur le second câble d'entrainement 42.
141, 142, 143, 144 Jeux de biellettes coopérant avec la plaque d'animation supérieure 120.
141a, 141b Biellette primaire et secondaire du jeu de biellette 141.
151, 152, 153, 154 Doigts des jeux de biellettes 141, 142, 143, 144.
161 Premier axe d'articulation de la biellette 141 sur le bord supérieur 110 du volet 11.
162 Second axe d'articulation reliant les biellettes 141 et 142.
171, 172, Sections longitudinale des rainures de guidage.
173 Rampe des rainures de guidage.
180 Glissières circulaires.
2 Second ensemble de volets.
21, 22, 23, 24 Volets du second ensemble de volets.
220 Plaque d'animation supérieure du second ensemble de volets.
225 Point d'attache de la plaque d'animation 220 sur le second câble d'entrainement 42.
230 Plaque d'animation inférieure du second ensemble de volets.
235 Point d'attache de la plaque d'animation 230 sur le premier câble d'entrainement 41.
3 Châssis.
41 Premier câble d'entrainement.
42 Second câble d'entrainement.
5 Poulie motorisée.
a₁a₁', b₁b₁', c₁c₁', d₁d₁', a₂a₂', b₂b₂', c₂c₂', d₂d₂' Axes de rotation des volets.
e₁e'₁, f₁f'₁, g₁g'₁, h₁h'₁, i₁i'₁, j₁j'₁, k₁k'₁, l₁l'₁ Axes des demi-volets du premier ensemble de volets
YY' Direction principale.
l1, l2, Longueurs des sections longitudinales 171 et 173 d'une rainure.
A Angle d'inclinaison de la rampe.
D Distance entre les deux sections longitudinales d'une rainure.

## Revendications

1. Dispositif de manœuvre d'un ou plusieurs ensembles de volets (1, 2) formé d'un ou plusieurs volets (11, 12, 13, 14 et 21, 22, 23, 24), chaque volet pivotant autour d'un axe de rotation (a₁a₁', b₁b₁', c₁c₁', d₁d₁', a₂a₂', b₂b₂', c₂c₂', d₂d₂') monté sur un châssis (3), les volets d'un ensemble de volets (1, 2) étant animés en rotation par au moins une plaque d'animation (120, 130, 220, 230) se déplaçant en translation entre deux positions extrémales selon un chemin linéaire situé dans un plan sensiblement perpendiculaire aux axes des volets et formant une direction principale (YY'), ladite plaque d'animation comportant des rainures de guidage (121, 122, 123, 124), chacune des rainures de guidage coopérant avec un doigt (151, 152, 153, 154) disposé sur un jeu de biellettes (141, 142, 143, 144) monté sur un bord supérieur (110) et/ou inférieur (111) de chacun des volets dudit ensemble, **caractérisé en ce que** la ou les plaques d'animation sont entrainées en translation par au moins un câble d'entrainement formant une boucle fermée et circulant le long des bords inférieurs et/ou supérieurs des volets de sorte que le mouvement d'une plaque d'animation (120, 130) entre lesdites positions extrémales dans un sens et dans un sens contraire entraine respectivement l'ouverture et la fermeture de chacun des volets dudit ensemble de volets.

2. Dispositif de manoeuvre selon la revendication 1, dans lequel chaque rainure de guidage (121, 122, 123, 124) comporte chacune deux sections longitudinales (171, 172) linéaires parallèles à la direction principale (YY'), distantes l'une de l'autre d'une valeur donnée non nulle (D), et reliées entre elles par une section transversale (173) formant une rampe faisant un angle donné (A) avec ladite direction principale (YY').

3. Dispositif de manoeuvre selon la revendication 2, dans lequel les positions selon la direction principale et les angles d'inclinaisons (A) des rampes (173) de chacune des rainures de guidage (121, 122, 123, 124) sont aménagés pour que, chacun des doigts (151, 152, 153, 154) engage la rampe (173) de la rainure de guidage avec laquelle il coopère entre deux positions de la plaque d'animation définies préalablement pour chacun des volets d'un ensemble, de sorte que les volets dudit ensemble s'ouvrent et se ferment selon un ordre prédéterminé.

4. Dispositif de manoeuvre selon l'une quelconque des revendications 2 ou 3, dans lequel un jeu de biellettes (141, 142, 143, 144) est formé d'une biellette primaire (141a) articulée autour d'un premier axe (161) monté sur le bord supérieur (110) et/ou inférieur (111) du volet, et d'une biellette secondaire (141b) supportant le doigt (151, 152, 153, 154) et reliée à la biellette primaire par une articulation pivotant librement autour d'un second axe (162), le premier et le second axe d'articulation des biellettes étant sensiblement parallèles à l'axe de rotation du volet sur lequel le jeu de biellette est monté.

5. Dispositif de manœuvre selon l'une des revendications 1 à 4, dans lequel la plaque d'animation (120, 130, 220, 230) se déplace entre ses deux positions extrémales selon une trajectoire linéaire présentant un rayon de courbure.

6. Dispositif de manoeuvre selon la revendication 5, dans lequel la plaque d'animation (120, 130, 220, 230) présente également un rayon de courbure identique à celui de la trajectoire sur laquelle elle circule.

7. Dispositif de manoeuvre selon l'une quelconque des revendications 1 à 6, dans lequel le ou les câbles d'entrainement (41, 42) effectuent au moins un tour mort selon un sens donné autour d'une ou plusieurs poulies motorisées (5), de sorte que la mise en rotation de la ou des dites poulies motorisées (5) entraine le mouvement en translation d'une ou plusieurs plaques d'animation.

8. Dispositif de manoeuvre selon l'une quelconque des revendications 1 à 7, dans lequel les volets (11, 12, 13, 14, et 21, 22, 23, 24) d'un ensemble de volets (1, 2) sont animés en rotation par une plaque d'animation supérieure (120, 220) et une plaque d'animation inférieure (130, 230) se déplaçant selon la direction principale (YY'), et coopérant chacune avec des jeux de biellettes reliées respectivement au bord supérieur (110) et au bord inférieur (111) de chacun des volets dudit ensemble de volets.

9. Dispositif de manoeuvre selon la revendication 8, dans lequel la plaque d'animation supérieure d'un ensemble de volets (120) et la plaque d'animation inférieure (130) du même ensemble de volets sont reliées à un câble d'entrainement unique ou à un premier et à un second câble d'entrainement de sorte que, lorsque la ou les poulies motorisées (5) sont mises en rotation, la plaque d'animation supérieure (120) et la plaque d'animation inférieure (130) dudit ensemble de volets (1) circulent dans le même sens selon la direction principale (YY').

10. Dispositif de manoeuvre selon l'une des revendications 1 à 9, comprenant deux ensembles de volets (1, 2) distincts l'un de l'autre, chacun des volets (11, 12, 13, 14) d'un ensemble (1) pivotant sur leurs axes respectifs selon un sens de rotation opposé au sens de rotation des volets (21, 22, 23, 24) de l'autre ensemble (2).

11. Dispositif de manoeuvre selon l'une des revendications 1 à 10, dans lequel un ensemble de volets est formé d'une ou plusieurs paires (13, 14, 15, 16, 17) de demi-volets (13a, 13b, 14a, 14b, 15a, 15b,16a, 16b, 17a, 17b) formées chacune d'un premier demi-volet et d'un second demi-volet pivotant chacun sur un axe (e₁e'₁, f₁f'₁, g₁g'₁, h₁h'₁, i₁i'₁, j₁j'₁, k₁k'₁, l₁l'₁) en sens opposé l'un de l'autre, chaque demi-volet comportant un ou plusieurs panneaux disposés de sorte que, lorsque la paire de demi-volets est en position fermée, les panneaux du premier demi-volet occultent une surface complémentaire à la surface occultée par les panneaux du deuxième demi-volet.

12. Dispositif de manœuvre selon la revendication 11 prise en combinaison avec la revendication 8, dans lequel les premiers demi-volets (15a, 16a, 17a, 18a) d'un ensemble (1) formé de paires de demi-volets sont entrainés par la plaque d'animation supérieure, et les seconds demi-volets (15b, 16b, 17b, 18b) dudit ensemble (1) formé de paires de demi-volets sont entrainés en rotation par la plaque d'animation inférieure.

## Patentansprüche

1. Vorrichtung zum Betätigen einer oder mehrerer Klappenanordnungen (1, 2), die von einer oder mehreren Klappen (11, 12, 13, 14 und 21, 22, 23, 24) gebildet ist, wobei jede Klappe um eine Drehachse (a₁a₁', b₁b₁', c₁c₁', d₁d₁', a₂a₂', b₂b₂', c₂c₂', d₂d₂') schwenkt, die auf einem Rahmen (3) gelagert ist, wobei die Klappen einer Klappenanordnung (1, 2) durch wenigstens eine Antriebsplatte (120, 130, 220, 230) zur Drehung angetrieben werden, die sich in Translation zwischen zwei Endpositionen gemäß einer linearen Bahn bewegt, die in einer Ebene liegt, die zu den Achsen der Klappen im Wesentlichen senkrecht ist und eine Hauptrichtung (YY')bildet, wobei die Antriebsplatte Führungsnuten (121, 122, 123, 124) aufweist, wobei jede der Führungsnuten mit einem Finger (151, 152, 153, 154) zusammenwirkt, der auf einem Satz von Schwingarmen (141, 142, 143, 144) angeordnet ist, der auf einem oberen Rand (110) und/oder unteren Rand (111) jeder der Klappen der Anordnung gelagert ist, **dadurch gekennzeichnet, dass** die Antriebsplatte oder die Antriebsplatten in Translation durch wenigstens ein Antriebskabel angetrieben werden, das einen geschlossenen Kreis bildet und entlang der unteren und/oder oberen Ränder der Klappen umläuft, so dass die Bewegung einer Antriebsplatte (120, 130) zwischen den Endpositionen in einer Richtung und in einer Gegenrichtung entsprechend das Öffnen und das Schließen jeder der Klappen der Klappenanordnung bewirkt.

2. Betätigungsvorrichtung nach Anspruch 1, wobei jede Führungsnut (121, 122, 123, 124) jede zwei lineare Längsabschnitte (171, 172) aufweist, die zu der Hauptrichtung (YY')parallel sind, voneinander um einen bestimmten Wert (D) ungleich null beabstandet sind und miteinander durch einen Querabschnitt (173) verbunden sind, der eine Rampe bildet, die mit der Hauptrichtung (YY')einen bestimmten Winkel (A) bildet.

3. Betätigungsvorrichtung nach Anspruch 2, wobei die Positionen gemäß der Hauptrichtung und die Neigungswinkel (A) der Rampen (173) jeder der Führungsnuten (121, 122, 123, 124) eingerichtet sind, damit jeder der Finger (151, 152, 153, 154) die Rampe (173) der Führungsnut in Eingriff nimmt, mit der er zwischen zwei Positionen der Antriebsplatte zusammenwirkt, die vorab für jede der Klappen einer Anordnung definiert wurden, so dass sich die Klappen der Anordnung gemäß einer vorher bestimmten Reihenfolge öffnen und schließen.

4. Betätigungsvorrichtung nach einem der Ansprüche 2 oder 3, wobei ein Satz von Schwingarmen (141, 142, 143, 144) von einem primären Schwingarm (141a) gebildet ist, der um eine erste Achse (161) angelenkt ist, die auf dem oberen Rand (110) und/oder unteren Rand (111) der Klappe gelagert ist, und von einem sekundären Schwingarm (141b) gebildet ist, der den Finger (151, 152, 153, 154) haltert und mit dem primären Schwingarm durch ein Gelenk verbunden ist, das frei um eine zweite Achse (162) schwenkt, wobei die erste und die zweite Gelenkachse der Schwingarme zu der Drehachse der Klappe, auf welcher der Schwingarmsatz gelagert ist, im Wesentlichen parallel sind.

5. Betätigungsvorrichtung nach einem der Ansprüche 1 bis 4, wobei die Antriebsplatte (120, 130, 220, 230) sich zwischen ihren zwei Endpositionen gemäß einer linearen Bahn bewegt, die einen Krümmungsradius aufweist.

6. Betätigungsvorrichtung nach Anspruch 5, wobei die Antriebsplatte (120, 130, 220, 230) auch einen Krümmungsradius aufweist, der mit dem der Bahn, auf der sie umläuft, identisch ist.

7. Betätigungsvorrichtung nach einem der Ansprüche 1 bis 6, wobei das oder die Antriebskabel (41, 42) wenigstens einen ganzen Schlag gemäß einer bestimmten Richtung um eine oder mehrere motorbetriebene Antriebsscheiben (5) vollziehen, so dass das Indrehungsversetzen der motorbetriebenen Antriebsscheibe oder Antriebsscheiben (5) die Bewegung in Translation einer oder mehreren Antriebsplatten bewirkt.

8. Betätigungsvorrichtung nach einem der Ansprüche 1 bis 7, wobei die Klappen (11, 12, 13, 14, und 21, 22, 23, 24) einer Klappenanordnung (1, 2) durch eine obere Antriebsplatte (120, 220) und untere Antriebsplatte (130, 230) zur Drehung angetrieben werden, die sich gemäß der Hauptrichtung (YY') bewegen und jede mit Schwingarmsätzen zusammenwirken, die entsprechend mit dem oberen Rand (110) und mit dem unteren Rand (111) jeder der Klappen der Klappenanordnung verbunden sind.

9. Betätigungsvorrichtung nach Anspruch 8, wobei die obere Antriebsplatte (120) einer Klappenanordnung und die untere Antriebsplatte (130) der gleichen Klappenanordnung mit einem einzigen Antriebskabel oder mit einem ersten und mit einem zweiten Antriebskabel verbunden sind, so dass, wenn die motorbetriebene Antriebsscheibe oder die motorbetriebenen Antriebsscheiben (5) in Drehung versetzt werden, die obere Antriebsplatte (120) und die untere Antriebsplatte (130) der Klappenanordnung (1) in der gleichen Richtung gemäß der Hauptrichtung (YY') umlaufen.

10. Betätigungsvorrichtung nach einem der Ansprüche 1 bis 9, umfassend zwei Klappenanordnungen (1, 2), die voneinander verschieden sind, wobei jede der Klappen (11, 12, 13, 14) einer Anordnung (1) auf ihren jeweiligen Achsen gemäß einer Drehrichtung schwenken, die zu der Drehrichtung der Klappen (21, 22, 23, 24) der anderen Anordnung (2) entgegengesetzt ist.

11. Betätigungsvorrichtung nach einem der Ansprüche 1 bis 10, wobei eine Klappenanordnung von einem oder mehreren Paaren (13, 14, 15, 16, 17) von Halbklappen (13a, 13b, 14a, 14b, 15a, 15b, 16a, 16b, 17a, 17b) gebildet ist, die jede von einer ersten Halbklappe und von einer zweiten Halbklappe gebildet sind, die jede auf einer Achse (e₁e'₁, f₁f'₁, g₁g'₁, h₁h'₁, i₁i'₁, j₁j'₁, k₁k'₁, l₁l'₁) in entgegengesetzter Richtung zueinander schwenken, wobei jede Halbklappe eine oder mehrere Platten aufweist, die so angeordnet sind, dass, wenn das Paar von Halbklappen in geschlossener Position ist, die Platten der ersten Halbklappe eine Fläche verdecken, die zu der Fläche komplementär ist, die von den Platten der zweiten Halbklappe verdeckt wird.

12. Betätigungsvorrichtung nach Anspruch 11 in Kombination mit Anspruch 8, wobei die ersten Halbklappen (15a, 16a, 17a, 18a) einer Anordnung (1), die von Paaren von Halbklappen gebildet ist, durch die obere Antriebsplatte angetrieben werden und die zweiten Halbklappen (15b, 16b, 17b, 18b) der Anordnung (1), die von Paaren von Halbklappen gebildet ist, durch die untere Antriebsplatte zur Drehung angetrieben werden.

## Claims

1. Device for manoeuvring one or more sets of flaps (1, 2) formed of one or more flaps (11, 12, 13, 14 and 21, 22, 23, 24), each flap pivoting about an axis of rotation (a₁a₁', b₁b₁', c₁c₁', d₁d₁', a₂a₂', b₂b₂', c₂c₂', d₂d₂') mounted on a chassis (3), the flaps of a set of flaps (1, 2) being set in rotation by at least one activating plate (120, 130, 220, 230) that moves in translation between two end positions along a linear path located in a plane substantially perpendicular to the axes of the flaps and forming a main direction (YY'), said activating plate having guide slots (121, 122, 123, 124), each of the guide slots engaging with a finger (151, 152, 153, 154) disposed on a set of link rods (141, 142, 143, 144) mounted on an upper edge (110) and/or a lower edge (111) of each of the flaps of said set, **characterised in that** the one or more activating plates are driven in translation by at least one drive cable forming a closed loop and circulating along the lower edges and/or upper edges of the flaps such that the movement of an activating plate (120, 130) between said end positions in one direction and in an opposite direction causes each of the flaps of said set of flaps to open and close respectively.

2. Manoeuvring device according to claim 1, wherein each guide slot (121, 122, 123, 124) comprises two linear longitudinal sections (171, 172) parallel to the main direction (YY'), separated from each other by a given non-zero value (D), and connected to each other by a transverse section (173) forming a ramp making a given angle (A) with said main direction (YY').

3. Manoeuvring device according to claim 2, wherein the positions in the main direction and the angles of inclination (A) of the ramps (173) of each of the guide slots (121, 122, 123, 124) are arranged so that each of the fingers (151, 152, 153, 154) engages in the ramp (173) of the guide slot with which it cooperates between two positions of the activating plate defined beforehand for each of the flaps of a set, such that the flaps of said set open and close in a predetermined order.

4. Manoeuvring device according to claim 2 or 3, wherein a set of link rods (141, 142, 143, 144) is formed of a primary link rod (141a) hinged about a first pin (161) mounted on the upper edge (110) and/or lower edge (111) of the flap, and of a secondary link rod (141b) supporting the finger (151, 152, 153, 154) and connected to the primary link rod by a hinge pivoting freely about a second pin (162), the first and second hinge pins of the link rods being substantially parallel to the axis of rotation of the flap on which the set of link rods is mounted.

5. Manoeuvring device according to one of claims 1 to 4, wherein the activating plate (120, 130, 220, 230) moves between its two end positions along a linear path having a radius of curvature.

6. Manoeuvring device according to claim 5, wherein the activating plate (120, 130, 220, 230) also has a radius of curvature identical to that of the path on which it circulates.

7. Manoeuvring device according to any one of claims 1 to 6, wherein the one or more drive cables (41, 42) perform at least one full turn in a given direction around one or more motorised pulleys (5), such that rotating one or more of said motorised pulleys (5) drives in translation one or more activating plates.

8. Manoeuvring device according to any one of claims 1 to 7, wherein the flaps (11, 12, 13, 14, and 21, 22, 23, 24) of a set of flaps (1, 2) are set in rotation by an upper activating plate (120, 220) and a lower activating plate (130, 230) moving in the main direction (YY'), and each cooperating with sets of link rods respectively connected to the upper edge (110) and the lower edge (111) of each of the flaps of said set of flaps.

9. Manoeuvring device according to claim 8, wherein the upper activating plate (120) of a set of flaps and the lower activating plate (130) of the same set of flaps are connected to a single drive cable or to a first drive cable and a second drive cable such that, when the one or more motorised pulleys (5) are set in rotation, the upper activating plate (120) and the lower activating plate (130) of said set of flaps (1) circulate in the same direction in the main direction (YY').

10. Manoeuvring device according to one of claims 1 to 9, comprising two sets of flaps (1, 2) separate from each other, each of the flaps (11, 12, 13, 14) of a set (1) pivoting on its respective axis in a direction of rotation opposite to the direction of rotation of the flaps (21, 22, 23, 24) of the other set (2).

11. Manoeuvring device according to one of claims 1 to 10, wherein a set of flaps is formed of one or more pairs (13, 14, 15, 16, 17) of half-flaps (13a, 13b, 14a, 14b, 15a, 15b, 16a, 16b, 17a, 17b) each formed of a first half-flap and a second half-flap each pivoting about an axis (e₁e'₁, f₁f'₁, g₁g'₁, h₁h'₁, i₁i'₁, j₁j'₁, k₁k'₁, l₁l'₁) in opposite directions to each other, each half-flap comprising one or more panels arranged such that, when the pair of half-flaps is in the closed position, the panels of the first half-flap hide a surface complementary to the surface hidden by the panels of the second half-flap.

12. Manoeuvring device according to claim 11 in combination with claim 8, wherein the first half-flaps (15a, 16a, 17a, 18a) of a set (1) formed of pairs of half-flaps are driven by the upper activating plate, and the second half-flaps (15b, 16b, 17b, 18b) of said set (1) formed of pairs of half-flaps are driven in rotation by the lower activating plate.
